# EUROPÄISCHE PATENTSCHRIFT

(11) **EP 3 613 670 B1**
(45) Veröffentlichungstag und Bekanntmachung des Hinweises auf die Patenterteilung: **26.01.2022**
(21) Anmeldenummer: 19187162.3
(22) Anmeldetag: 19.07.2019
(51) Int. Cl.: B64C 27/12, B64C 27/32

(54) **KRAFTÜBERTRAGUNGSVORRICHTUNG FÜR EIN DREHFLÜGELFLUGZEUG**
POWER TRANSMISSION DEVICE FOR A HELICOPTER
DISPOSITIF DE TRANSMISSION DE FORCE POUR UN GIRAVION

(30) Priorität: 06.08.2018 DE 102018213092
(43) Veröffentlichungstag der Anmeldung: 26.02.2020
(73) Patentinhaber: ZF Friedrichshafen AG, 88046 Friedrichshafen (DE)
(72) Erfinder: Lieder, Sergej, 34123 Kassel (DE); Rösener, Timm, 34121 Kassel (DE); Kühne, Martin, 34479 Breuna (DE)
(74) Vertreter: ZF Friedrichshafen AG

(56) Entgegenhaltungen:
- WO-A1-2017/085926
- DE-A1-102012 203 178
- US-A- 5 360 376
- US-A- 5 785 434
- US-B1- 6 283 639

## Beschreibung

Die vorliegende Erfindung betrifft einen Rotormast mit einer Kraftübertragungsvorrichtung eines Drehflügelflugzeugs, der über ein oberes und ein unteres Wälzlager drehbar gelagert ist.

Eine Kraftübertragungseinrichtung ist aus der DE 14 56 089 bekannt. Die Kraftübertragungseinrichtung befindet sich üblicherweise am oberen Ende einer Antriebswelle für die Flügel bzw. Rotorblätter eines Drehflügelflugzeugs. Gewisse Drehflügelflugzeuge haben keine gelenkig gelagerten Rotorblätter, so dass die Kräfte und Vibrationen der Rotorblätter unmittelbar in den Rotormast eingeleitet werden. Dies führt zu erheblichen Belastungen des Rotormastes bei derartigen Drehflügelflugzeugen und so werden Rotormasten insbesondere bei derartigen Drehflügelflugzeugen leicht ausbaubar ausgelegt. Der Rotormast ist dementsprechend üblicherweise lediglich durch eine unterhalb des unteren Lagers befindliche Mastmutter gesichert und kann nach Lösen der Mastmutter nach oben aus einem den Rotormast aufnehmenden und insbesondere das obere Lager abstützenden Lagerkranz herausgezogen werden, um den Rotormast im Rahmen von Wartungsarbeiten auf Defekte zu inspizieren. Der grundsätzliche Aufbau des Rotormastes, den sich vorzugsweise auch die vorliegende Erfindung zu Eigen macht, ist in der DE 199 44 412 C2 beschrieben, die im Übrigen ein Beispiel für eine Lösung vorstellt, den Rotormast auch im Betrieb auf eventuelle Defekte hin zu überprüfen.

Die unmittelbare Einleitung von Kräften und Momenten der Rotorblätter in den Rotormast führt zu einer erheblichen Biegebeanspruchung desselben. So treten zwischen dem unteren und dem oberen Wälzlager, die etwa 300 mm von einander entfernt sind, Biegungen des Rotormastes mit einem Winkel von bis zu 0,5 Grad auf. Dies führt zu einer Ovalisierung der Berührungsflächen zwischen dem oberen Wälzlager und der Abstützung für dieses obere Wälzlager. Als Folge ergibt sich eine relative Drehbewegung zwischen der Abstützfläche und dem oberen Wälzlager entgegen der Drehrichtung des Rotormastes. Um diese Relativdrehung und damit einen abrasiven Verschleiß zu verhindern ist es bekannt, den inneren Ring des oberen Wälzlagers, der üblicherweise unmittelbar mit dem Rotormast zusammenwirkt, verdrehsicher abzustützen. Hierzu weist eine Stirnseite des
inneren Rings üblicherweise auf dem Umfang verteilt vorgesehene Ausnehmungen auf, in welche abstützungsseitig gehaltene Stifte bzw. Nasen eingreifen.

Gleichwohl ergibt sich durch die Ovalisierung eine Relativbewegung in axialer Richtung. Die Stifte werden periodisch aus den Ausnehmungen herausgezogen und in diese hereingedrückt. Es ergibt sich ein abrasiver Verschleiß an den Seitenwänden der Stifte, so dass die gewünschte verdrehgesicherte Halterung des Lagers nicht mehr gewährleistet ist. Im Übrigen kann Abrieb dieses Verschleißes in die Lager gelangen, was die Betriebssicherheit des Drehflügelflugzeuges gefährdet.

Aus der DE 10 2012 203 178 A1 wird demgegenüber eine verbesserte Kraftübertragungsvorrichtung vorgeschlagen, bei welcher ein zwischen dem unteren und dem oberen Wälzlager angeordnetes Distanzrohr einen ersten Längenabschnitt und einem zweiten Längenabschnitt aufweist, wobei der zweite Längenabschnitt wiederum eine im Vergleich zum ersten Längenabschnitt erhöhte Biegeelastizität aufweist. Hierdurch wird bereits eine Kraftübertragungseinrichtung mit verbesserter Lebensdauer realisiert.

Die US 5 785 434 A betrifft einen einstellbaren Abstandshalter in Form eines Rings zur Montage zwischen einem Paar konischer Lager, die auf einer Achse oder Spindel montiert sind, damit eine Last axial auf die Lager aufgebracht werden kann, wird offenbart. Der einstellbare Abstandshalter kann eine Verlängerung, die sich in einem Radius von einer imaginären Achse des Abstandshalters befindet, ein Kontaktmittel, das radial nach außen von der Verlängerung ausgerichtet ist, und einen komprimierbaren Bereich, der sich zwischen dem Kontaktmittel und der Verlängerung befindet, umfassen, wobei sich der komprimierbare Bereich verformt, wenn eine vorbestimmte Last auf den Ring in der axialen Richtung aufgebracht wird. Der einstellbare Abstandshalter kann so konfiguriert sein, dass er mit einer Adapterhülse zur Verwendung auf Achsen oder Spindeln mit mehreren Radien verwendet werden kann.

Die US 6 283 639 B1 offenbart ein System zum Einstellen eines verstellbaren Abstandshalters. Ein Abschnitt mit hoher Kompression ist zur Aufnahme des Abstandshalters für eine Lagereinheit vorgesehen. Ein Abschnitt mit niedriger Kompression ist angepasst, um die Lagerbaugruppe aufzunehmen. In einem Aspekt kann ein Transferrahmen als mechanische Schnittstelle zwischen dem hochkomprimierten Abschnitt und dem niedrigkomprimierten Abschnitt dienen. Außerdem kann der Transferrahmen so ausgelegt sein, dass er einen ersten Weg, der eine erste Kompression des Abstandshalters mit dem hochverdichtenden Abschnitt anzeigt, an den niederverdichtenden Abschnitt überträgt. Ein Sensor kann mit dem Hochkompressionsabschnitt und dem Niedrigkompressionsabschnitt gekoppelt sein. Ferner kann der Sensor dazu dienen, die erste Kompression entsprechend einem zweiten Weg zu begrenzen, der eine zweite Kompression der Lagereinheit mit dem Abschnitt mit niedriger Kompression anzeigt. Darüber hinaus sind der erste Weg und der zweite Weg vorzugsweise darauf bezogen eine gewünschte Einstellung (z. B. Vorspannung) des Abstandshalters vorzusehen.

Die WO 2017/085 926 A1 offenbart einen Mastabstandshalter, der zwischen einem Mastlager und einer Mastmutter in einer Hauptwelle eines Hubschraubers vorgesehen ist, hat einen zylindrischen Abstandshalterkörper. Ein erstes Ende des Mastabstandshalters ist ein Lagerkontaktende, das an einem Innenring des Mastlagers befestigt werden kann. Das Lagerkontaktende ist z.B. mit Lagervorsprüngen versehen, die in Ausnehmungen im Innenring des Mastlagers einpassbar sind. Der Abstandshalterkörper ist mit Schlitzen versehen, z. B. mit einem spiralförmigen Schlitz, der seine Seitenwand durchdringt. Die Schlitze haben eine lineare Form, die eine axiale Richtung des zylindrischen Abstandskörpers kreuzt.

Aus der US 5 360 376 A ist eine Kupplungsvorrichtung zur Übertragung von Drehmoment zwischen zwei rotierenden Antriebswellensegmenten bekannt. Die Kupplungsvorrichtung umfasst einen Verriegelungsmechanismus zur Verhinderung von axialen Auslenkungen der Antriebswellensegmente relativ zueinander, wenn die Antriebswellensegmente gekoppelt sind und ein Drehmoment übertragen. Die Kupplungsvorrichtung bietet darüber hinaus ein Mittel zum schnellen Trennen der Antriebswellensegmente, wenn die Übertragung des Drehmoments nicht mehr erwünscht ist und eine Entkopplung bevorzugt wird. Die Kupplungsvorrichtung umfasst zusätzlich eine Führungsstift- und Hülsenanordnung zur Führung der Antriebswellensegmente beim Kuppeln. Es ist auch ein Antriebssystem vorgesehen, das eine flexible Kupplung zum Ausgleich von Axial- und Winkelversatz der Antriebswellensegmente zueinander umfasst.

Es ist wünschenswert einen Rotormast mit einer Kraftübertragungsvorrichtung umfassend ein Distanzrohr für ein Drehflügelflugzeug bereitzustellen, das eine darüber hinaus verbesserte Lebensdauer aufweist und zugleich mehr Freiheiten bei der Dimensionierung des Distanzrohres ermöglicht.

Die Aufgabe der Erfindung liegt darin, einen solchen Rotormast mit einer Kraftübertragungsvorrichtung umfassend ein Distanzrohr für ein Drehflügelflugzeug bereitzustellen.

Die Aufgabe wird durch einen Rotormast mit einer Kraftübertragungsvorrichtung umfassend ein Distanzrohr gemäß den Merkmalen des Anspruchs 1 gelöst. Die Aufgabe wird zudem durch ein Drehflügelflugzeug mit den Merkmalen des Anspruchs 10 gelöst.

Die Erfindung geht demnach aus von einem Rotormast mit einer Kraftübertragungsvorrichtung für ein Drehflügelflugzeug, der über ein unteres und oberes Wälzlager drehbar gelagert ist, die Kraftübertragungsvorrichtung umfassend ein zwischen dem unteren und oberen Wälzlager angeordnetes Distanzrohr, wobei das Distanzrohr einen ersten und einen zweiten Längenabschnitt aufweist, wobei der zweite Längenabschnitt eine höhere Biegeelastizität als der erste Längenabschnitt aufweist.

Ein Drehflügelflugzeug ist ein Luftfahrzeug, das seinen Auftrieb durch mindestens einen, um eine vertikale Achse drehenden Rotor erhält, wie insbesondere ein Hubschrauber.

Das Distanzrohr ist üblicherweise so ausgebildet, dass dieses eine durch die Mastmutter bewirkte bzw. gesicherte Vorspannkraft zwischen den beiden Lagern überträgt. Dies bedeutet, dass üblicherweise der erste Längenabschnitt als Hülse mit hoher Biegesteifigkeit und üblicherweise den Rotormast unmittelbar umgebend ausgebildet ist. Dieser erste Längenabschnitt bildet dabei üblicherweise den unteren Längenabschnitt des Distanzrohres, der benachbart zu dem unteren Wälzlager vorgesehen ist und sich üblicherweise über eine Sicherungshülse abstützt, die von der Mastmutter übergriffen ist, eine Anlagefläche für das untere Wälzlager ausbildet und mit welcher der Rotormast üblicherweise verschraubt ist. Die Mastmutter oder Wellenmutter bewirkt eine Vorspannung des Distanzrohres zischen dem unteren und oberen Wälzlager.

Dem gegenüber weist der zweite Längenabschnitt eine höhere Biegeelastizität auf. Die Biegeelastizität ist derart, dass regelmäßig für das obere Wälzlager eine ringförmige Anlagefläche bereitgestellt wird, welche der Ovalisierung bedingt durch die biegemäßige Auslenkung des Rotormastes jederzeit folgen kann. Der Innenring des oberen Wälzlagers liegt dementsprechend auf dem Distanzrohr vollflächig auf, auch wenn erhebliche Biegekräfte in den Rotormast eingeleitet werden und dieser um seine Längsachse erheblich gebogen wird.

Die Erfindung zeichnet sich nun dadurch aus, dass der erste Längenabschnitt einen nach radial innen gerichteten Vorsprung aufweist, der zur axialen Abstützung des Distanzrohrs am Rotormast in eine entsprechende Ausnehmung des Rotormasts greift, derart, dass bei Einleitung von Rotorkräften der zweite Längenabschnitt axial entlastet ist und ferner dass für die bessere Einstellung der Vorspannung ein Distanzelement, insbesondere eine Distanzscheibe, vorgesehen ist, das axial zwischen dem Vorsprung des Distanzrohres und der Ausnehmung des Rotormasts angeordnet ist.

Der sich ausgehend von dem Distanzrohr nach radial Innen erstreckende Vorsprung (gelegentlich auch als Nase bezeichnet) ist mit dem Distanzrohr fest verbunden oder mit ihm einstückig ausgebildet. Im eingebauten Zustand greift der Vorsprung in die Ausnehmung des Rotormastes derart ein, dass der Rotormast auf dem Vorsprung aufliegt.

Nach Einbau wirken auf das Distanzrohr beim Betrieb dementsprechend zum einen die über den Vorsprung eingeleiteten axialen Kräfte, weswegen der erste Längenabschnitt entsprechend biegesteif ausgebildet ist.

Des Weiteren wirkt auf das Distanzrohr die Biegebeanspruchung, welche indes aufgrund des zweiten Längenabschnitts so kompensiert wird, dass die Wälzlager mit ihren zugehörigen und den Rotormast abstützenden Innenringen axial vollflächig abgestützt sind, auch dann, wenn der Rotormast eine erhebliche Durchbiegung erfährt.

Anders als bspw. im Stand der Technik ist das Distanzrohr nun derart ausgebildet, dass axiale Kräfte des Rotors nicht über das obere Wälzlager in den oberen biegeelastischen Teil des Distanzrohrs sondern über den im unteren biegesteifen Teil angeordneten Vorsprung in das untere Wälzlager eingeleitet werden. Der obere biegeelastische Teil des Distanzrohres, also der zweite Längenabschnitt ist im Betrieb axial entlastet. Anders ausgedrückt, liegt der biegeelastische Teil des Distanzstücks im Betrieb nicht mehr im Hauptlastpfad. Dementsprechend ist er nicht mehr lastabhängig und weniger "Fatigue" gefährdet.

Die Entlastung des Distanzstücks bewirkt einerseits eine Reduzierung von Verschleißteilen bzw. Erhöhung der Lebensdauer. Zudem ergeben sich zusätzlich hinsichtlich Steifigkeit bzw. Biegeelastizität größere Konstruktionsspielräume.

Unter dem Begriff "axiale Kraft" (Axialkraft) ist eine Kraft oder Kraftkomponente gemeint, die in Richtung der Achse des Rotormastes (und damit auch der Achse des Distanzstücks) wirkt.

Da die relative Auslenkung des Rotormastes aufgrund einer Biegebeanspruchung zum freien Ende des Rotormastes, d. h. nach oben zunimmt, wird der zweite Längenabschnitt üblicherweise im oberen Bereich des Distanzrohres vorgesehen.

Diese Weiterbildung führt üblicherweise zu einem Distanzrohr mit zwei Längenabschnitten unterschiedlicher Biegesteifigkeit, wobei der untere Längenabschnitt als Hülsenabschnitt ausgeformt ist und der obere Längenabschnitt unmittelbar eine Anlagefläche für das obere Wälzlager bereitstellt. An dieser Stelle sei nochmals daran erinnert, dass zwar zwischen oberem Längenabschnitt und dem oberen Wälzlager eine Kontaktfläche besteht und somit eine durch die Wellenmutter aufgebrachte Vorspannung im Distanzrohr existieren kann - die axiale Krafteinleitung beim Betrieb jedoch über den Vorsprung des unteren Längenabschnitts erfolgt. Dementsprechend ist das obere Wälzlager an dem zweiten Längenabschnitt nur leicht abgestützt.

Wenngleich aufgrund der in Längenabschnitten veränderten Biegeelastizität des Distanzrohres alternative Möglichkeiten denkbar sind, das obere Wälzlager mit seinem Innenring verdrehfest gegenüber dem Distanzrohr zu halten, werden gemäß einer bevorzugten Weiterbildung der vorliegenden Erfindung Formschlusselemente vorgeschlagen, die zwischen dem zweiten Längenabschnitt und dem oberen Wälzlager vorgesehen sind und durch welche das Distanzrohr verdrehfest an dem oberen Wälzlager, speziell an dem auf dem Rotormast aufsitzenden inneren Laufring des oberen Wälzlagers gesichert ist.

Der zweite Längenabschnitt weist gemäß einer bevorzugten Weiterbildung eine mäandrierende Querschnittsgestalt auf. Diese mäandrierende Querschnittsgestalt zeigt sich bei einer Längsschnittansicht durch das Distanzrohr regelmäßig in Form von Ringsegmenten mit unterschiedlichem Durchmesser, die in axialer Richtung alternierend zueinander vorgesehen und die durch üblicherweise sich in radialer Richtung erstreckende Verbindungssegmente miteinander verbunden sind. Dabei ist jeweils zumindest ein äußeres und ein inneres Ringsegment vorgesehen, wobei das
äußere Ringsegment üblicherweise über ein unteres radiales Verbindungssegment mit dem ersten Längenbereich verbunden ist. Zur Erhöhung der Biegeelastizität sind in der Regel jeweils mehrere äußere und mehrere innere Ringsegmente in axialer Richtung alternierend ausgeformt. Die inneren Ringsegmente haben dabei einen Innendurchmesser, der in etwa dem Außendurchmesser des Rotormastes entspricht, so dass beide Durchmesser angepasst sind.

Durch die radiale Erstreckung der radialen Verbindungssegmente kann die Biegesteifigkeit angepasst werden. Eine weitere Anpassung der Biegesteifigkeit kann durch die Materialwahl und/oder die Wandstärke erfolgen. Dabei will die vorliegende Erfindung indes vorzugsweise ein Distanzrohr schaffen, bei welchem der erste und der zweite Längenabschnitt integral an einem einheitlichen Bauteil ausgeformt sind. Es sind zwar auch Lösungen denkbar, bei welchen die Längenabschnitte mit Blick auf die unterschiedliche Biegeelastizität durch unterschiedliche Materialen ausgeformt und miteinander verbunden werden. Die Herstellung des Distanzrohres aus einem einheitlichen Werkstoff wird aber aus Gründen der Dauerfestigkeit bevorzugt.

So ist das Distanzrohr vorzugsweise aus einem zunächst geschmiedeten Rohling hergestellt. Die mäandrierende Querschnittsgestalt wird in diesem üblicherweise durch spanhebende Bearbeitung ausgeformt, d. h. indem zunächst an einem Längenabschnitt des geschmiedeten Rohlings mit dickerer Wandstärke von der Innenumfangsfläche her radial nach außen reichende Nuten ausgedreht werden, die sich mit radial nach innen von der Außenumfangsfläche her erstreckenden Nuten in axialer Richtung abwechseln.

Die vorliegende Erfindung betrifft ferner ein Drehflügelflugzeug mit einem Antrieb und einem Rotormast, der zwischen dem Antrieb und Rotorblättern vorgesehen ist und über ein unteres und ein oberes Wälzlager drehbar gelagert ist. Das Drehflügelflugzeug, insbesondere in der Form eines Hubschraubers, weist ein zwischen dem unteren und dem oberen Wälzlager angeordnetes Distanzrohr mit einem ersten Längenabschnitt und einem zweiten Längenabschnitt auf. Der zweite Längenabschnitt weist gegenüber dem ersten Längenabschnitt eine erhöhte Biegeelastizität auf, wobei der erste Längenabschnitt einen nach radial innen gerichteten Vorsprung aufweist, der zur axialen Abstützung des Distanzrohrs am Rotormast in eine entsprechende Ausnehmung des Rotormasts greift, derart, dass bei Einleitung von Rotorkräften der zweite Längenabschnitt axial entlastet ist.

Ein weiterer Aspekt der Erfindung ist, ein Distanzrohr für eine Kraftübertragungsvorrichtung eines Drehflügelflugzeugs mit einem Rotormast bereitzustellen, wobei der Rotormast über ein unteres und oberes Wälzlager drehbar gelagert ist. Das Distanzrohr weist einen ersten und einen zweiten Längenabschnitt auf, wobei der zweite Längenabschnitt eine höhere Biegeelastizität als der erste Längenabschnitt aufweist. Der erste Längenabschnitt weist einen nach radial innen gerichteten Vorsprung auf, der ausgebildet ist, zur axialen Abstützung des Distanzrohrs am Rotormast in eine entsprechende Ausnehmung des Rotormasts einzugreifen.

Weitere Einzelheiten und Vorteile der vorliegenden Erfindung werden anhand der nachfolgenden Figuren erläutert. Es zeigen:
- Fig. 1: eine bevorzugte Ausführungsform eines erfindungsgemäßen Distanzrohres in einer perspektivischen Seitenansicht;
- Fig. 2: das Distanzrohr gemäß Fig. 1 in einem Längsschnitt;
- Fig. 3: das Distanzrohr gemäß Fig. 1, 2 in einer Einbausituation in einem Längsschnitt; und
- Fig. 4: ein Hubschrauber mit dem in Fig. 1, 2, 3 gezeigten Ausführungsbeispiel in einer schematischen Ansicht.

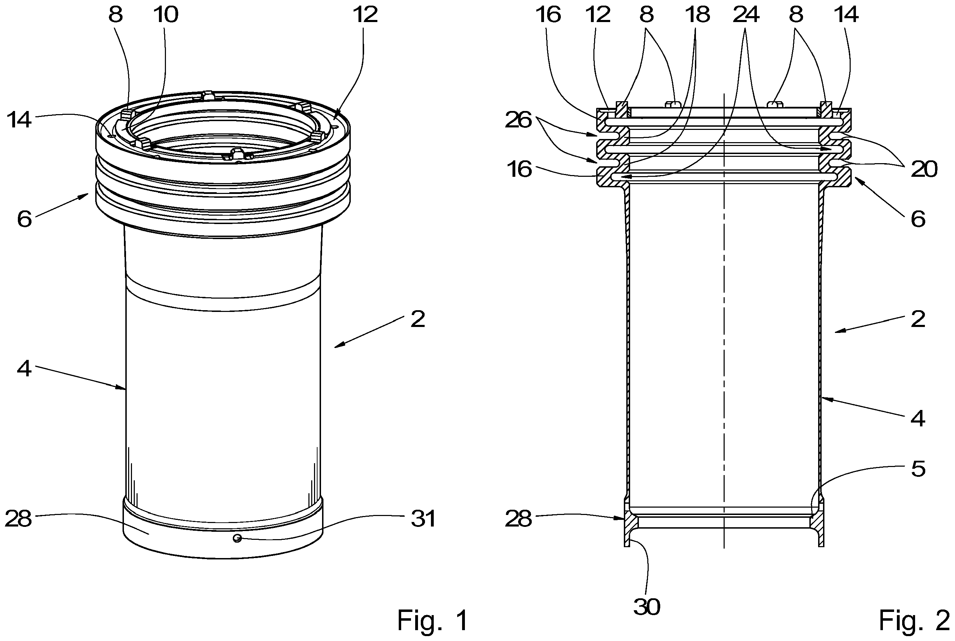

Die Fig. 1 und 2 zeigen ein Ausführungsbeispiel eines mit Bezugszeichen 2 gekennzeichneten Distanzrohres, bei welchem es sich um ein mittels spanhebender Bearbeitung aus einem geschmiedeten zylindrischen Rohling ausgeformten Bauteil handelt. Das Distanzrohr 2 hat zwei Längenabschnitte, wobei einer erster Längenabschnitt 4 den unteren Längenabschnitt bildet und ein zweiter Längenabschnitt 6 das obere Ende des Distanzrohres 2 ausformt, an dessen Stirnseite auf dem Umfang verteilt vorgesehene Nasen 8 ausgeformt sind. Diese Nasen 8 erheben sich axial von einer inneren Ringfläche 10, der außenumfänglich von einer umlaufenden Nut 12 umgeben ist, auf deren Umfang verteilt Schmiermittelbohrungen 14 ausgespart sind.

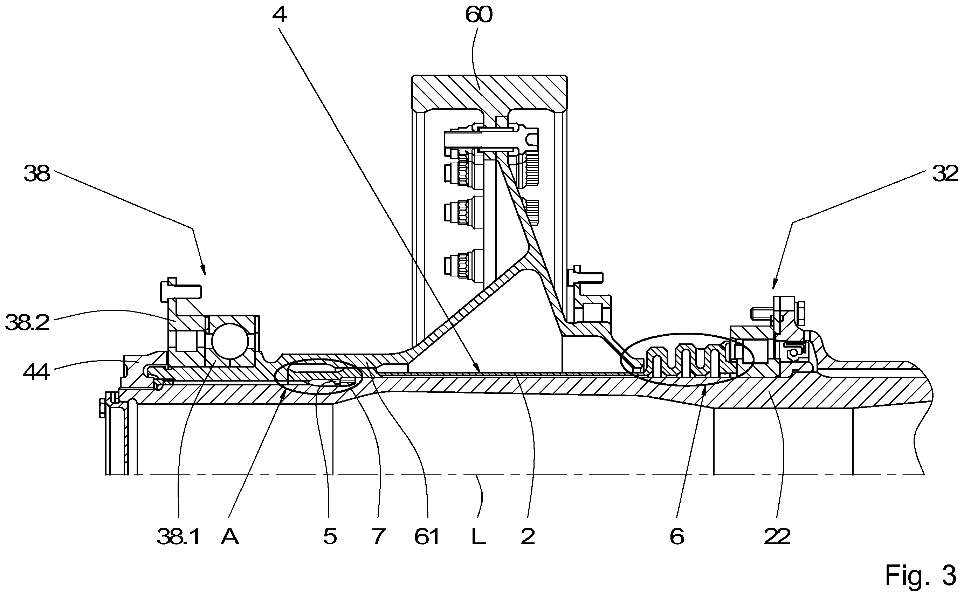

Der zweite Längenabschnitt 6 ist gebildet durch drei äußere Ringsegmente 16, drei innere Ringsegmente 18 sowie jeweils dazwischen vorgesehene radiale Verbindungssegmente 20. Die äußeren Ringsegmente 16 haben bei dem gezeigten Ausführungsbeispiel jeweils einen identischen äußeren Radius, der in etwa dem Radius des Rohlings zur Ausformung des Distanzrohres 2 jedenfalls im oberen, zweiten Längenabschnitt 6 entspricht. Der innere Durchmesser der inneren Ringsegmente 18 ist geringfügig größer als der Außendurchmesser eines Rotormastes gewählt, der in Fig. 3 dargestellt und dort mit Bezugszeichen 22 gekennzeichnet ist. Der Innendurchmesser der inneren Ringsegmente 18 ist an diesen Außendurchmesser des Rotormastes 22 so angepasst, dass ein Ringspalt verbleibt, durch den Schmiermittel fließen kann. Die äußeren und inneren Ringsegmente 16, 18 sind durch Nuten voneinander getrennt. Es sind vom Innenumfang des Distanzrohres 2 radial nach außen reichende innere radiale Nuten 24 vorgesehen, die durch Drehbearbeitung von der Innenumfangsfläche des Rohlings her ausgespart sind, so wie vom Außenumfang radial nach innen ausgeformt äußere radiale Nuten 26, die durch spanhebende Bearbeitung von der Außenumfangsfläche des Rohlings ausgespart sind. Das obere innere Ringsegment 18 bildet die innere Ringfläche 10 aus.

Der erste Längenabschnitt 4 ist im Wesentlichen hülsenförmig mit glatter Außenumfangsfläche ausgeformt. Die Innenfläche ist bis auf den nicht dargestellten sich radial nach innen erstreckenden Vorsprung ebenfalls mit glatter Innenumfangsfläche ausgeformt. Die Innenumfangsfläche umgibt den Rotormast radial mit geringem Spiel. Lediglich ein unterer Fuß 28 des Distanzrohres 2, ist demgegenüber verbreitert und weist an seinem Innenumfang den sich radial nach Innen erstreckenden Vorsprung, ein Innengewinde 30 sowie Schmiermitteldurchtritte 31 auf.

Der Vorsprung muss derart ausgeformt sein, dass der Rotormast darauf abgestützt werden kann und Kräfte, insbesondere axial wirkende Kräfte, über den Vorsprung in den Fuß des Distanzstücks 2 und damit ins untere Wälzlager einleiten kann.

Durch die zuvor beschriebene Ausgestaltung hat der zweite Längenabschnitt 6 eine erhöhte Biegeelastizität und axiale Kompressibilität gegenüber dem ersten Längenabschnitt 4. Zudem ist das obere Ende im Betrieb axial entlastet, wenn die axialen Kräfte des Rotors in den Vorsprung des Distanzrohrs 2 eingeleitet werden.

Die Fig. 3 zeigt die Einbausituation des in den Fig. 1 und Fig. 2 gezeigten Ausführungsbeispiels wobei zusätzlich noch eine Spannscheibe 7 vorgesehen ist. Zusätzlich zeigt Fig. 3 einen Rotormasten 22, zwei den Rotormasten 22 lagernden Lager 32, 38 und eine Summenwelle 60.

Die Summenwelle 60 überträgt ein Antriebsmoment eines nicht dargestellten Getriebes auf den Rotormast 22. Die Summenwelle ist hierzu mit einem als Steck- oder Klemmverbindung 61 ausgebildeten Steckarm formschlüssig zwischen dem unteren Lager 38 und Rotormast 22 gesteckt bzw. geklemmt und mittels einer Mast- oder Wellenmutter 44 axial fixiert.

Das Distanzrohr 2 umgibt den Rotormast 22, der oberseitig von einem als Zylinderrollenlager ausgebildeten oberen Wälzlager 32 abgestützt ist, dessen Innenring oberseitig über eine Distanzhülse 33 an einer mit Bezugszeichen 34 gekennzeichneten Anlageschulter des Rotormastes 22 anliegt. Der Außenring des oberen Wälzlagers 32 wird von einem Lagerkranz 35 gehalten, der mehrere Bauteile hat und erhaben über einem Chassis 36 eines Drehflügelflugzeuges montiert ist (vgl. DE 14 56 089 A1).

Das Chassis 36 umgibt ein unteres Wälzlager 38, welches ein als Vierpunktlager ausgebildetes Rillenkugellager 38.1 und ein darunter angeordnetes Zylinderrollenlager 38.2 umfasst. Dieses so gebildete untere Wälzlager 38 stützt sich über eine Sicherungshülse 40 an dem Rotormast 22 ab. Die Sicherungshülse 40 ist mit dem Rotormast 22 verschraubt, der hierzu ein Außengewinde 42 aufweist. Das Rillenkugellager 38.1 und das Zylinderrollenlager 38.2 bilden ein sogenanntes Lagerpaket. Durch das Rillenkugellager 38.1 können insbesondere Axialkräfte und durch das Zylinderrollenlager 38.2 können insbesondere Radialkräfte aufgenommen werden.

Das freie Ende des Rotormastes 22 ist mit der Mastmutter 44 verschraubt, die einen Ringkragen 46 ausformt, der an dem unteren Wälzlager 38 anliegt und die inneren Ringe der Lagerelemente 38.1, 38.2 gegen eine durch die Sicherungshülse 40 ausgeformte Ringfläche 48 andrückt. Die Sicherungshülse 40 stützt ferner axial den Fuß 28 des Distanzrohres 2 ab.

Das obere Wälzlager 32 ist, wie vorstehend beschrieben, als Zylinderrollenlager ausgeformt. An der unteren Stirnseite des inneren Laufringes dieses Wälzlagers 32 sind auf dem Umfang verteilt vorgesehene Ausnehmungen 50 ausgespart, in welchen die Nasen 8 als Sicherungsstifte eingreifen, so dass der innere Ring des oberen Wälzlagers 32 verdrehfest an dem inneren Anlagering 10 des Distanzrohres 2 anliegt. Durch Verschrauben der Sicherungshülse 40 und Kontern mit der Mastmutter 44 sind die Wälzlager 32, 38 unter Zwischenlage des Distanzrohres 2 unter Vorspannung gehalten.

Die Vorspannkraft wird oberseitig axial einerseits durch Anlage des inneren Laufringes des oberen Wälzlagers 32 an der Anlageschulter 34 des Rotormastes 22 abgestützt. Andererseits wird die Vorspannkraft oberseitig axial durch Anlage einer oberen Anlagefläche des Vorsprungs 5 an einer entsprechenden Anlagefläche der Spannscheibe 7, welche wiederum an einer Anlagefläche der Sicherungshülse 40 anliegt, abgestützt.

In der bevorzugten Ausführung gemäß Fig. 3 erfolgt die axiale Belastung bzw. die axiale Entlastung beim Betrieb demnach überwiegend in einem mit A gekennzeichnet Bereich. Die axiale Kraft des Rotormasts 22 wird demnach über die Anlagefläche und die Spannscheibe 7 in den Vorsprung 5 des Distanzstücks geleitet. Da das Distanzstück 2 auf der Sicherungshülse 40 abgestützt ist, wird die axiale Kraft vom Distanzstück 2 weiter in die Sicherungshülse 40 geleitet, von welcher sie anschließend in das Rillenkugellager 38.1 abgeführt wird. Der Längenabschnitt 6 ist dadurch axial entlastet. Die am oberen Wälzlager 32 wirkende axiale Kraft beschränkt sich damit ungefähr auf den Wert der Vorspannkraft oder auf einen Wert, der unterhalb der Vorspannkraft liegt.

Bei einer Biegebeanspruchung des Rotormastes 22 ergibt sich eine gedachte Biegelinie, die tangential - so die Anschauung auf Höhe des unteren Wälzlagers 38 - von der in Fig. 3 eingezeichneten Mittellängsachse L abgeht und diese in Richtung auf das obere Ende des Rotormastes 22 zunehmend verlässt. Aufgrund der Rotation des Rotormastes ist diese Biegelinie eine in Umfangsrichtung umlaufende Biegelinie.

Die in den Rotormast 22 eingebrachte Biegebeanspruchung wird durch den zweiten Längenabschnitt 6 kompensiert. Auf der Druckseite nähern sich die Ringsegmente 16, 18 unter Verringerung der lichten Weite der Nuten 24, 26 an einander an, wohingegen auf der Zugseite eine Dehnung stattfindet. Beim Zusammenbau der in Fig. 3 gezeigten Kraftübertragungsvorrichtung für das Drehflügelflugzeug wird vorzugsweise eine gewisse axiale Vorspannung in den zweiten Längenabschnitt 6 eingebracht, so dass dieser sich auf der Zugseite auch über seine Einbaulage hinaus axial dehnen und der Taumelbewegung des freien Endes des Rotormastes 22 und damit des oberen Wälzlagers 32 folgen kann.

Folglich wird der innere Ring des oberen Wälzlagers 32 auch bei einer erheblichen Biegeauslenkung des Rotormastes 22 sicher zwischen dem inneren Anlagering 10 des Distanzrohres 2 und der rotormastseitigen Anlageschulter 34 unter Vorspannung angelegt und gehalten.

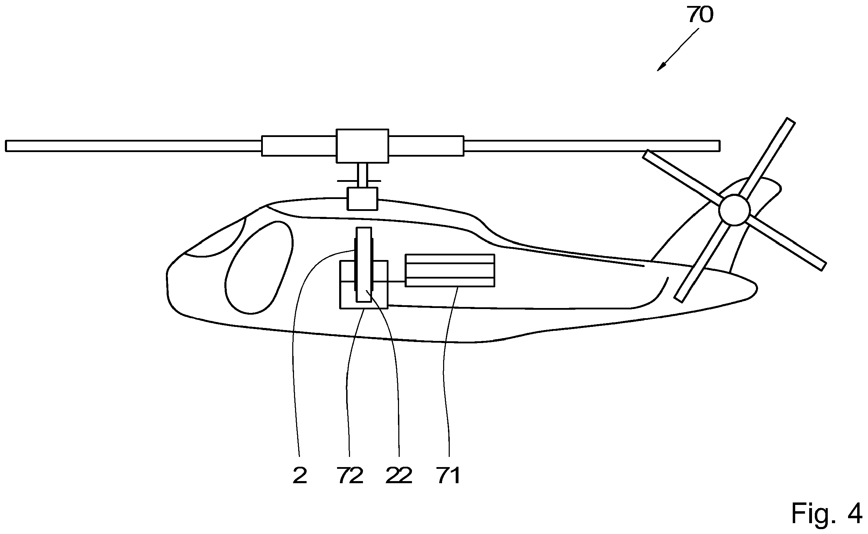

Fig. 4 zeigt ein Drehflügelflugzeug 70 in der Form eines konventionellen Hubschraubers mit einer Antriebsmaschine 71, die über ein Getriebe 72 den Rotormast 22 antreibt. Der Hubschrauber 70 weist eine Kraftübertragungsvorrichtung mit einem in den Fig. 1 bis 3 beschriebenen Distanzstück auf.

### Bezugszeichen

- 2: Distanzrohr
- 4: erster Längenabschnitt
- 5: Vorsprung, Nase
- 6: zweiter Längenabschnitt
- 7: Distanzelement, Spannscheibe
- 8: Nase
- 10: innerer Anlagering
- 12: Nut
- 14: Bohrung
- 16: äußeres Ringsegment
- 18: innere Ringfläche
- 20: radiales Verbindungselement
- 22: Rotormast
- 24: innere radiale Nut
- 26: äußere radiale Nut
- 28: Fuß
- 30: Innengewinde
- 31: Schmiermitteldurchtritt
- 32: oberes Wälzlager
- 33: Distanzhülse
- 34: Anlageschulter
- 35: Lagerkranz
- 36: Chassis
- 38: unteres Wälzlager
- 38.1: Rillenkugellager
- 38.2: Zylinderrollenlager
- 40: Sicherungshülse
- 42: Außengewinde
- 44: Mastmutter
- 46: Ringkragen
- 48: Ringfläche
- 50: Ausnehmung
- 60: Summenwelle
- 61: Steckarm, Klemm- bzw. Steckverbindung
- 70: Drehflügelflugzeug, Hubschrauber
- 71: Antriebsmaschine
- 72: Getriebe
- A: Bereich der axialen Belastung
- L: Mittellängsachse

## Patentansprüche

1. Rotormast (22) mit einer Kraftübertragungsvorrichtung für ein Drehflügelflugzeug, wobei der Rotormast (22) über ein unteres und oberes Wälzlager (38, 32) drehbar gelagert ist und die Kraftübertragungsvorrichtung ein zwischen dem unteren und oberen Wälzlager angeordnetes Distanzrohr (2)umfasst, wobei das Distanzrohr (2) einen ersten und einen zweiten Längenabschnitt (4, 6) aufweist, wobei der zweite Längenabschnitt (6) eine höhere Biegeelastizität als der erste Längenabschnitt (4) aufweist, **dadurch gekennzeichnet, dass** der erste Längenabschnitt (4) einen nach radial innen gerichteten Vorsprung (5) aufweist, der zur axialen Abstützung des Distanzrohrs (2) am Rotormast (22) in eine entsprechende Ausnehmung des Rotormasts (22) greift, derart, dass bei Einleitung von Rotorkräften der zweite Längenabschnitt (6) axial entlastet ist und ein Distanzelement (7), insbesondere eine Distanzscheibe, vorgesehen ist, das axial zwischen dem Vorsprung (5) des Distanzrohres (2) und der Ausnehmung des Rotormasts (22) angeordnet ist.

2. Rotormast (22) mit einer Kraftübertragungsvorrichtung nach Anspruch 1, wobei der zweite Längenabschnitt (6) gegenüber dem ersten Längenabschnitt (4) eine erhöhte axiale Kompressibilität aufweist.

3. Rotormast (22) mit einer Kraftübertragungsvorrichtung nach einem der vorherigen Ansprüche, wobei der zweite Längenabschnitt (6) das obere Wälzlager (32) abstützt.

4. Rotormast (22) mit einer Kraftübertragungsvorrichtung nach einem der vorherigen Ansprüche, wobei zwischen dem zweiten Längenabschnitt (6) und dem oberen Wälzlager (32) Formschlusselemente (8) vorgesehen sind, durch welche das Distanzrohr (2) verdrehfest an dem oberen Wälzlager (32) gesichert ist.

5. Rotormast (22) mit einer Kraftübertragungsvorrichtung nach einem der vorherigen Ansprüche, wobei der zweite Längenabschnitt (6) eine mäandrierende Querschnittsgestalt (16, 18, 20, 24, 26) aufweist.

6. Rotormast (22) mit einer Kraftübertragungsvorrichtung nach Anspruch 5, wobei die mäandrierende Querschnittsgestalt innere und äußere, über ein radiales Verbindungssegment (20) miteinander verbundene Ringsegmente (16, 18) aufweist.

7. Rotormast (22) mit einer Kraftübertragungsvorrichtung nach Anspruch 6, wobei das innere Ringsegment (18) einen Innendurchmesser hat, der an den Außendurchmesser des Rotormastes (22) angepasst ist.

8. Rotormast (22) mit einer Kraftübertragungsvorrichtung nach Anspruch 6 oder 7, wobei eines der inneren Ringsegmente (18) das obere Wälzlager (32) abstützt.

9. Rotormast (22) mit einer Kraftübertragungsvorrichtung nach einem der vorherigen Ansprüche, wobei der Vorsprung (5) in einem Bereich des ersten Längenabschnitts (4) ausgebildet ist, der dem zweiten Längenabschnitt (6) axial gegenüberliegt.

10. Drehflügelflugzeug mit einem Rotormast (22) mit einer Kraftübertragungsvorrichtung nach einem der Ansprüche 1 bis 9.

## Claims

1. Rotor mast (22) having a power transmission device for a rotary-wing aircraft, wherein the rotor mast (22) is mounted rotatably via a lower and an upper rolling bearing (38, 32), and the power transmission device comprises a spacer tube (2) arranged between the lower and upper rolling bearing, wherein the spacer tube (2) has a first and a second length portion (4, 6), wherein the second length portion (6) has higher flexural elasticity than the first length portion (4), **characterized in that** the first length portion (4) has a radially inwardly directed protrusion (5) which, for axially supporting the spacer tube (2) on the rotor mast (22), reaches into a corresponding recess of the rotor mast (22) in such a manner that, when rotor forces are introduced, the second length portion (6) is axially relieved of load and a spacer element (7), in particular a spacer disc, is provided which is arranged axially between the protrusion (5) of the spacer tube (2) and the recess of the rotor mast (22) .

2. Rotor mast (22) having a power transmission device according to Claim 1, wherein the second length portion (6) has increased axial compressor ability in relation to the first length portion (4).

3. Rotor mast (22) having a power transmission device according to one of the preceding claims, wherein the second length portion (6) supports the upper rolling bearing (32).

4. Rotor mast (22) having a power transmission device according to one of the preceding claims, wherein form-fitting elements (8) are provided between the second length portion (6) and the upper rolling bearing (32) and by means of which the spacer tube (2) is secured against twisting on the upper rolling bearing (32).

5. Rotor mast (22) having a power transmission device according to one of the preceding claims, wherein the second length portion (6) has a meandering cross-sectional form (16, 18, 20, 24, 26).

6. Rotor mast (22) having a power transmission device according to Claim 5, wherein the meandering cross-sectional form has inner and outer ring segments (16, 18) which are connected to each other via a radial connecting segment (20).

7. Rotor mast (22) having a power transmission device according to Claim 6, wherein the inner ring segment (18) has an inside diameter which is matched to the outside diameter of the rotor mast (22).

8. Rotor mast (22) having a power transmission device according to Claim 6 or 7, wherein one of the inner ring segments (18) supports the upper rolling bearing (32).

9. Rotor mast (22) having a power transmission device according to one of the preceding claims, wherein the protrusion (5) is formed in a region of the first length portion (4) that lies axially opposite the second length portion (6).

10. Rotary-wing aircraft with a rotor mast (22) having a power transmission device according to one of Claims 1 to 9.

## Revendications

1. Mât de rotor (22) comprenant un dispositif de transmission de force pour un giravion, le mât de rotor (22) étant monté à rotation par l'intermédiaire d'un palier à roulement inférieur et supérieur (38, 32), et le dispositif de transmission de force comprenant un tube d'écartement (2) agencé entre le palier à roulement inférieur et supérieur, le tube d'écartement (2) présentant une première et une deuxième section longitudinale (4, 6), la deuxième section longitudinale (6) présentant une élasticité en flexion plus élevée que la première section longitudinale (4), **caractérisé en ce que** la première section longitudinale (4) présente une saillie (5) dirigée radialement vers l'intérieur, qui s'engage dans un évidement correspondant du mât de rotor (22) pour le support axial du tube d'écartement (2) sur le mât de rotor (22), de telle sorte que, lors de l'introduction de forces de rotor, la deuxième section longitudinale (6) est déchargée axialement, et un élément d'écartement (7), en particulier une rondelle d'écartement, est prévu, qui est agencé axialement entre la saillie (5) du tube d'écartement (2) et l'évidement du mât de rotor (22) .

2. Mât de rotor (22) comprenant un dispositif de transmission de force selon la revendication 1, dans lequel la deuxième section longitudinale (6) présente une compressibilité axiale plus élevée par rapport à la première section longitudinale (4).

3. Mât de rotor (22) comprenant un dispositif de transmission de force selon l'une quelconque des revendications précédentes, dans lequel la deuxième section longitudinale (6) supporte le palier à roulement supérieur (32).

4. Mât de rotor (22) comprenant un dispositif de transmission de force selon l'une quelconque des revendications précédentes, dans lequel des éléments d'accouplement de forme (8) sont prévus entre la deuxième section longitudinale (6) et le palier à roulement supérieur (32), par lesquels le tube d'écartement (2) est assujetti de manière immobile en rotation sur le palier à roulement supérieur (32).

5. Mât de rotor (22) comprenant un dispositif de transmission de force selon l'une quelconque des revendications précédentes, dans lequel la deuxième section longitudinale (6) présente une forme de section transversale en méandres (16, 18, 20, 24, 26).

6. Mât de rotor (22) comprenant un dispositif de transmission de force selon la revendication 5, dans lequel la forme de section transversale en méandres comprend des segments annulaires intérieurs et extérieurs (16, 18), reliés entre eux par un segment de liaison radial (20).

7. Mât de rotor (22) comprenant un dispositif de transmission de force selon la revendication 6, dans lequel le segment annulaire intérieur (18) a un diamètre intérieur qui est adapté au diamètre extérieur du mât de rotor (22) .

8. Mât de rotor (22) comprenant un dispositif de transmission de force selon la revendication 6 ou 7, dans lequel un des segments annulaires intérieurs (18) supporte le palier à roulement supérieur (32).

9. Mât de rotor (22) comprenant un dispositif de transmission de force selon l'une quelconque des revendications précédentes, dans lequel la saillie (5) est formée dans une zone de la première section longitudinale (4) qui est axialement opposée à la deuxième section longitudinale (6).

10. Giravion comprenant un mât de rotor (22) comprenant un dispositif de transmission de force selon l'une quelconque des revendications 1 à 9.
